# EUROPEAN PATENT SPECIFICATION

(11) **EP 3 421 731 B1**
(45) Date of publication and mention of the grant of the patent: **09.08.2023**
(21) Application number: 18179056.9
(22) Date of filing: 21.06.2018
(51) Int. Cl.: F01D 11/08, F01D 5/20, F01D 5/28, F01D 11/12

(54) **COMPRESSOR INNER AIR SEAL AND METHOD OF MAKING**
VERDICHTERINNENLUFTDICHTUNG UND VERFAHREN ZUR HERSTELLUNG
JOINT D'AIR INTÉRIEUR DE COMPRESSEUR ET PROCÉDÉ DE FABRICATION

(30) Priority: 26.06.2017 US 201715633222
(43) Date of publication of application: 02.01.2019
(73) Proprietor: Raytheon Technologies Corporation, Farmington, CT 06032 (US)
(72) Inventor: STROCK, Christopher W., Kennebunk, ME Maine 04043 (US); LUTJEN, Paul M., Kennebunkport, ME Maine 04046 (US)
(74) Representative: Dehns

(56) References cited:
- EP-A1- 2 444 593
- EP-A1- 3 020 931
- EP-A2- 2 444 515
- EP-A2- 2 481 890
- US-A- 5 879 753
- US-A1- 2014 044 527

## Description

### BACKGROUND

The subject matter disclosed herein generally relates to gas turbine engines and, more particularly, to compressor air seal systems.

Gas turbine engines include compressor rotors with a plurality of rotating compressor blades. Minimizing the leakage of air between tips of the compressor blades and a casing of the gas turbine engine increases the efficiency of the gas turbine engine as the leakage of air over the tips of the compressor blades can cause aerodynamic efficiency losses. To minimize leakage, the gap at tips of the compressor blades is set so small that at certain conditions, the blade tips may rub against and engage an abrasive seal on the casing of the gas turbine. The abradability of the seal material prevents damage to the blades while the seal material itself wears to generate an optimized mating surface and thus reduce the leakage of air.

Cantilevered vanes that seal against a rotor land are also used for elimination of the air leakage in turbine engines. The layers of the abrasive coating on the rotor land experience significant amounts of thermal and mechanical stress. The layers may each have a different modulus of elasticity or undergo different rates of thermal expansion. This can cause the connections between each layer to fail or cause cracks to form in the coating. These cracks can propagate through the coating and cause spallation. There is a need for an improved abrasive coating on the rotor land.

EP 3 020 931 discloses an abrasive coating forming a seal material on components of gas turbine engines and a process for forming the abrasive coating. EP 2 444 593 discloses an abrasive coating on a rotor shaft which interacts with cantilevered vanes to form an abradable air seal in a turbine engine. EP 2 481 890 discloses a seal and a method of forming the seal in a gas turbine engine component.

### SUMMARY

According to one embodiment, a compressor inner air seal (e.g. an inner airseal formed by the method disclosed herein) for a gas turbine engine includes a bond coat disposed on a substrate, wherein the substrate is a rotor land, an interlayer disposed on the bond coat, and an abrasive layer disposed on the interlayer. The abrasive layer consists of an oxide ceramic or mixture of oxide ceramics that has a hardness on the Mohs scale of 7 or higher and the interlayer comprises alumina. The abrasive layer is applied at a temperature 400 to 1400 °F (222°C to 778°C) less than the temperature used to apply the interlayer. The interlayer is applied at a temperature of 600 to 1600°F (315 to 872°C). The interlayer has a thickness of 0.1 to 5.0 mils (2.54 × 10⁻⁶ to 1.27 × 10⁻⁴ meters).

In some embodiments the bond coat comprises Ni₅Al, Ni₂₀Al, NiCr, NiCrAl, MCrAlY, or MCrAlYHfSi and/or has a thickness of 3 to 6 mils (7.62 × 10⁻⁵ to 15.24 × 10⁻⁵ meters).

In some embodiments the abrasive layer comprises alumina and/or has a thickness of 2 to 20 mils (5.08 × 10⁻⁵ to 5.08 × 10⁻⁴ meters).

In some embodiments the abrasive layer has a surface roughness of 40 to 200 micro inches (1.01 to 5.06 micrometers).

In some embodiments the inner seal includes a transition layer between the interlayer and the abrasive layer. The transition layer may have a thickness greater than 0 to 10 mils (0 to 2.54 × 10⁻⁴ meters), e.g. greater than 0 mils (0 meters) and up to 10 mils (2.54 × 10⁻⁴ meters), or greater than 0 mils (0 meters) or greater than 10 mils (2.54 × 10⁻⁴ meters).

In addition to one or more of the features described above, or as an alternative, a method for forming a compressor inner air seal (e.g. as disclosed herein) for a gas turbine engine includes applying an interlayer on a bond coat, wherein the bond coat is disposed on a substrate; and applying an abrasive layer on the interlayer. The substrate is a rotor land. The abrasive layer consists of an oxide ceramic or mixture of oxide ceramics that has a hardness on the Mohs scale of 7 or higher. The interlayer comprises alumina. The abrasive layer is applied at a temperature 400 to 1400°F (222°C to 778°C) less than the temperature used to apply the interlayer. The interlayer is applied at a temperature of 600 to 1600°F (315 to 872°C). The interlayer has a thickness of 0.1 to 5.0 mils (2.54 × 10⁻⁶ to 1.27 × 10⁻⁴ meters).

In some embodiments the interlayer is formed by air plasma spraying an interlayer material onto the bond coat e.g. while the substrate and bond coat are held at an elevated temperature.

In some embodiments applying the abrasive layer includes air plasma spraying abrasive layer material onto the interlayer.

In some embodiments the method of making an inner seal further includes treating the abrasive layer to roughen the surface of the abrasive layer.

The foregoing features and elements may be combined in various combinations without exclusivity, unless expressly indicated otherwise. These features and elements as well as the operation thereof will become more apparent in light of the following description and the accompanying drawings. It should be understood, however, that the following description and drawings are intended to be illustrative and explanatory in nature and non-limiting.

### BRIEF DESCRIPTION OF THE DRAWINGS

The subject matter is particularly pointed out and distinctly claimed at the conclusion of the specification. The foregoing and other features, and advantages of the present disclosure are apparent from the following detailed description taken in conjunction with the accompanying drawings in which:
FIG. 1A is a schematic cross-sectional illustration of a gas turbine engine architecture that may employ various embodiments disclosed herein;
FIG. 1B is a schematic cross-sectional illustration of another gas turbine engine architecture that may employ various embodiments disclosed herein;
FIG. 2 is a schematic illustration of a compressor section of a gas turbine engine that may employ various embodiments disclosed herein;
FIG. 3 is a schematic illustration of a compressor section of a gas turbine engine that may employ various embodiments disclosed herein;
FIG. 4 is a schematic illustration of the layers in an inner seal; and
FIG. 5 is a flow chart illustrating an exemplary embodiment of a method for forming the air seal of FIG. 4.

### DETAILED DESCRIPTION

As shown and described herein, various features of the disclosure will be presented. Various embodiments may have the same or similar features and thus the same or similar features may be labeled with the same reference numeral, but preceded by a different first number indicating the Figure Number to which the feature is shown. Thus, for example, element "##" that is shown in FIG. X may be labeled "X##" and a similar feature in FIG. Z may be labeled "Z##." Although similar reference numbers may be used in a generic sense, various embodiments will be described and various features may include changes, alterations, modifications, etc. as will be appreciated by those of skill in the art, whether explicitly described or otherwise would be appreciated by those of skill in the art.

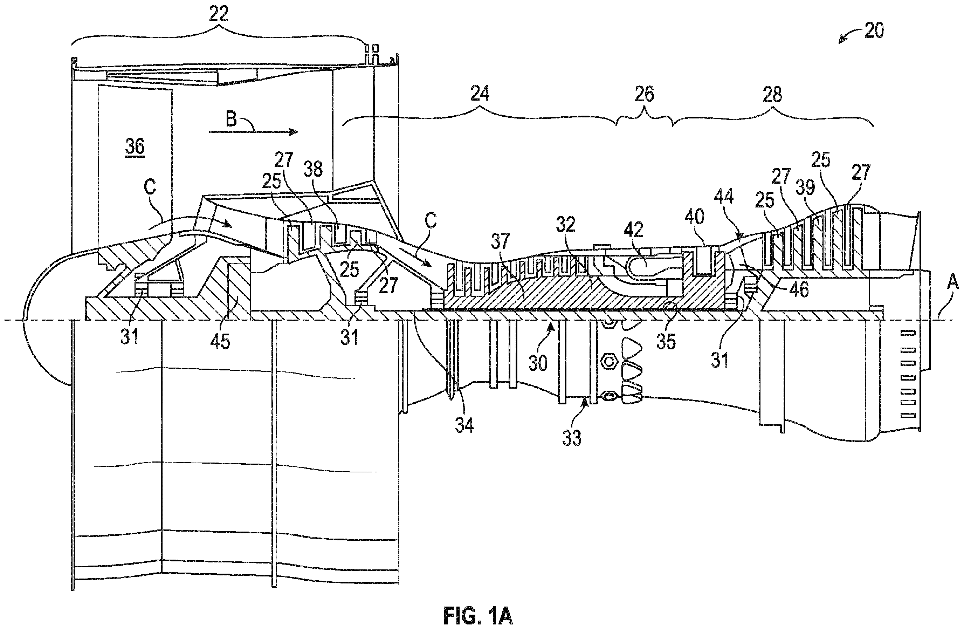

FIG. 1A schematically illustrates a gas turbine engine 20. The exemplary gas turbine engine 20 is a two-spool turbofan engine that generally incorporates a fan section 22, a compressor section 24, a combustor section 26, and a turbine section 28. Alternative engines might include an augmenter section (not shown) among other systems for features. The fan section 22 drives air along a bypass flow path B, while the compressor section 24 drives air along a core flow path C for compression and communication into the combustor section 26. Hot combustion gases generated in the combustor section 26 are expanded through the turbine section 28. Although depicted as a turbofan gas turbine engine in the disclosed non-limiting embodiment, it should be understood that the concepts described herein are not limited to turbofan engines and these teachings could extend to other types of engines, including but not limited to, three-spool engine architectures.

The gas turbine engine 20 generally includes a low speed spool 30 and a high speed spool 32 mounted for rotation about an engine centerline longitudinal axis A. The low speed spool 30 and the high speed spool 32 may be mounted relative to an engine static structure 33 via several bearing systems 31. It should be understood that other bearing systems 31 may alternatively or additionally be provided.

The low speed spool 30 generally includes an inner shaft 34 that interconnects a fan 36, a low pressure compressor 38 and a low pressure turbine 39. The inner shaft 34 can be connected to the fan 36 through a geared architecture 45 to drive the fan 36 at a lower speed than the low speed spool 30. The high speed spool 32 includes an outer shaft 35 that interconnects a high pressure compressor 37 and a high pressure turbine 40. In this embodiment, the inner shaft 34 and the outer shaft 35 are supported at various axial locations by bearing systems 31 positioned within the engine static structure 33.

A combustor 42 is arranged between the high pressure compressor 37 and the high pressure turbine 40. A mid-turbine frame 44 may be arranged generally between the high pressure turbine 40 and the low pressure turbine 39. The mid-turbine frame 44 can support one or more bearing systems 31 of the turbine section 28. The mid-turbine frame 44 may include one or more airfoils 46 that extend within the core flow path C.

The inner shaft 34 and the outer shaft 35 are concentric and rotate via the bearing systems 31 about the engine centerline longitudinal axis A, which is colinear with their longitudinal axes. The core airflow is compressed by the low pressure compressor 38 and the high pressure compressor 37, is mixed with fuel and burned in the combustor 42, and is then expanded over the high pressure turbine 40 and the low pressure turbine 39. The high pressure turbine 40 and the low pressure turbine 39 rotationally drive the respective high speed spool 32 and the low speed spool 30 in response to the expansion of the combustion gases from the combustor 42.

Each of the compressor section 24 and the turbine section 28 may include alternating rows of rotor assemblies and vane assemblies (shown schematically) that carry airfoils that extend into the core flow path C. For example, the rotor assemblies can carry a plurality of rotating blades 25, while each vane assembly can carry a plurality of vanes 27 that extend into the core flow path C. The blades 25 of the rotor assemblies deliver or extract energy (in the form of pressure) to or from the core airflow that is communicated through the gas turbine engine 20 along the core flow path C. The vanes 27 of the vane assemblies direct the core airflow to the blades 25 to either deliver or extract energy to or from the flow, respectively.

Various components of a gas turbine engine 20, including but not limited to the airfoils of the blades 25 and the vanes 27 of the compressor section 24 and the turbine section 28, may be subjected to repetitive thermal cycling under widely ranging temperatures and pressures.

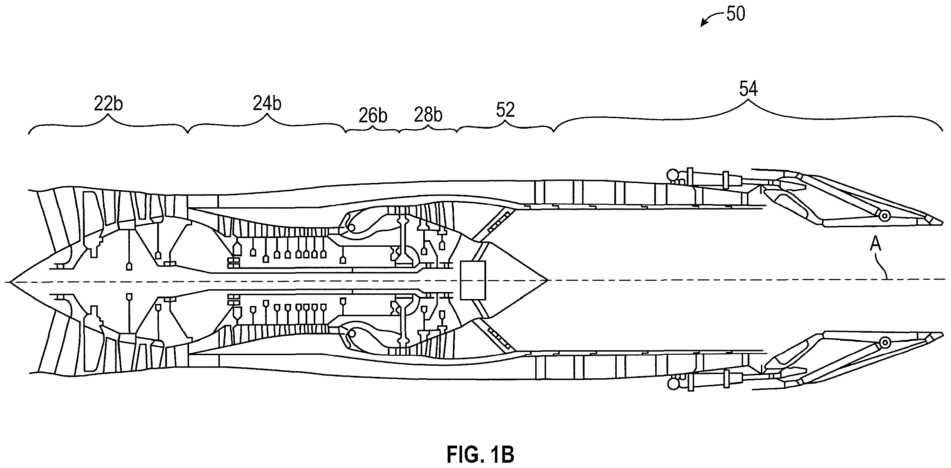

Referring to FIG. 1B, an alternative engine architecture of a gas turbine engine 50 may also include an augmenter section 52 and an exhaust duct section 54 among other systems or features. Otherwise, the engine architecture of the gas turbine engine 50 may be similar to that shown in FIG. 1A. That is, the gas turbine engine 50 includes a fan section 22b that drives air along a bypass flowpath while a compressor section 24b drives air along a core flowpath for compression and communication into a combustor section 26b then expansion through a turbine section 28b.

Although two architectures for gas turbine engines are depicted (e.g., high bypass turbofan in FIG. 1A, low bypass augmented turbofan FIG. 1B) in the disclosed non-limiting embodiments, it should be understood that the concepts described herein are not limited to use with the shown and described configurations, as the teachings may be applied to other types of gas turbine engines such as, but not limited to, geared/non-geared turbojets, turboshafts, geared/non-geared three-spool (plus fan) turbofans, and turboprop engines (e.g., pusher, tug, etc.) wherein an intermediate spool includes an intermediate pressure compressor ("IPC") between a low pressure compressor ("LPC") and a high pressure compressor ("HPC"), and an intermediate pressure turbine ("IPT") between the high pressure turbine ("HPT") and the low pressure turbine ("LPT").

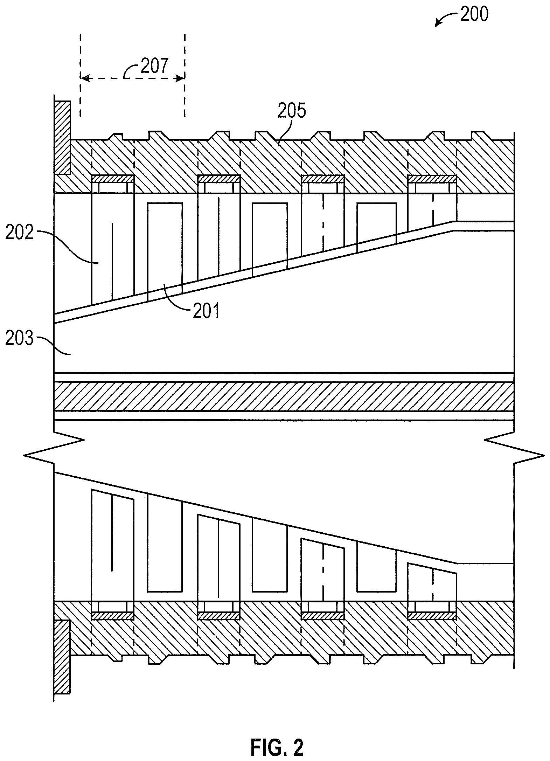

FIG. 2 is a schematic view of a compressor section of a gas turbine engine that may employ various embodiments disclosed herein. Compressor section 200 includes a plurality of airfoils, including, for example, one or more blades 201 and vanes 202 (generically referred to as "airfoil 210"). The blades 201 are configured on one or more rotor hubs 203 (depending on engine configuration), and, in some embodiments, may be integrally formed with the respective hub 203. The vanes 202 are fixedly attached to a case 205. An adjacent blade 201 and vane 202 can form a stage 207 of the compressor section 200. The case 205 can have multiple parts (e.g., turbine case, diffuser case, etc.). In various locations, components, such as seals, may be positioned between airfoils 203 and the case 205.

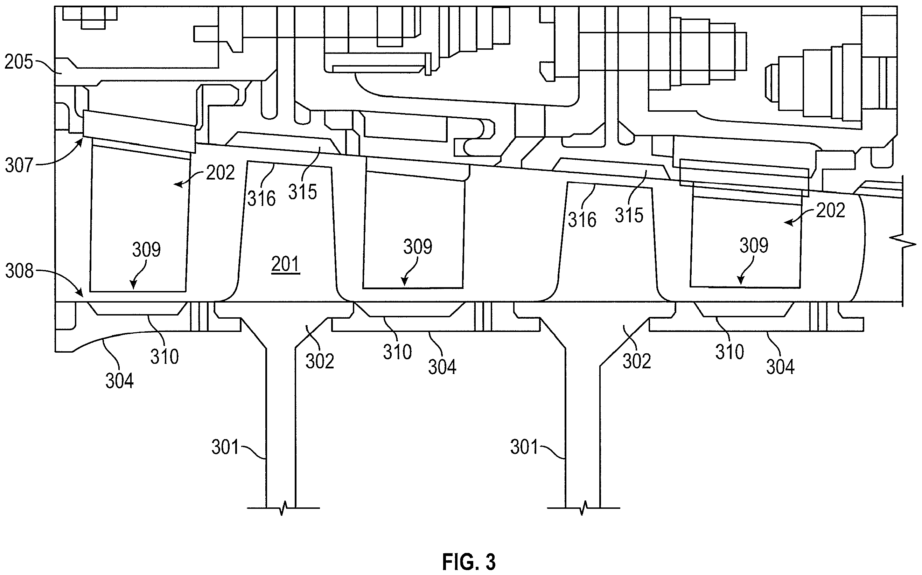

A more detailed schematic view of a compressor section is shown in FIG. 3. Multiple disks 301 rotate about the axis centerline axis to rotate the compressor blades 201. Each disk 301 includes a disk rim 302, and each disk rim 302 supports a compressor blade 201. A rotor land 304 extends from each disk rim 302 between adjacent disk rims 302.

In one example, the vanes 202 are cantilevered vanes. That is, the vanes 202 are fixed to an engine casing or other structure 205 at a radial outward end 307 and are unsupported at a radial inward end 308. A tip 309 of the radial inward end 308 of each vane 202 extends adjacent to an inner air seal 310. The radial outward end 307 is mounted to the engine casing or other structure 205, which surrounds the compressor, the combustion section, and the turbine. The tip 304 of each vane 202 may contact the inner air seal 310 to limit re-circulation of airflow within the compressor. An outer air seal 315 is located on the engine casing or other structure 205 proximate to tips 316 of the compressor blades 201.

The inner air seal includes a bond coat disposed on a substrate such as a rotor land, an interlayer disposed on the bond coat, and an abrasive layer disposed on the interlayer. The abrasive layer consists of an oxide ceramic or mixture of oxide ceramics that has a hardness on the Mohs scale of 7 or higher. The interlayer is applied at a temperature of 600 to 1600°F (315 to 872°C). The interlayer has a thickness of 0.1 to 5.0 mils (2.54 × 10⁻⁶ to 1.27 × 10⁻⁴ meters).

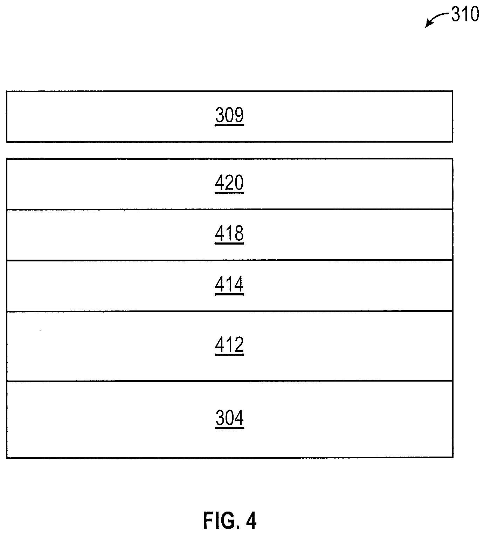

As shown in Fig. 4, air seal 310 is an inner air seal located between the vanes 202 and the rotor land 304. Several layers of material are applied to the rotor land to form the air seal 310. These layers include bond coat 412 disposed on the substrate. The bond coat 412 is metallic and can have a thickness of 3 to 6 mils (7.62 × 10⁻⁵ to 15.24 × 10⁻⁵ meters), although it is also contemplated that the bond coat thickness can be between 0.5 to 18 mils (1.27 × 10⁻⁵ to 4.572 × 10⁻⁴ meters) thick.

An interlayer 414 is disposed on the bond coat 412. The interlayer 414 can be deposited onto the surface of the bond coat 412 at an elevated substrate temperature and can be 1.0 to 3.0 mils (2.54 × 10⁻⁵ to 7.62 × 10⁻⁵ meters) thick. The interlayer 414 is 0.1 to 5.0 mils (2.54 × 10⁻⁶ to 1.27 × 10⁻⁴ meters) thick. The interlayer 414 provides a tough interface with the bond coat 412 which exhibits a higher resistance to crack propagation than the abrasive layer 420 (described below), thus improving spallation resistance. The interlayer comprises alumina (Al₂O₃).

An abrasive layer 420 is disposed onto the surface of the interlayer 414. The abrasive layer 420 is deposited onto the surface of the interlayer 414 at a substrate temperature less than the substrate temperature used to deposit the interlayer. The substrate temperature for abrasive layer deposition is 400°F to 1400°F (222°C to 778°C) less than the substrate temperature for interlayer deposition. The abrasive layer may comprise alumina. The abrasive layer may have a surface roughness (Ra) of 40 to 200 micro inches (1.01 to 5.06 micrometers), or 80 to 120 micro inches (2.03 to 3.03 micrometers). The surface roughness can be created by single point turning or a similar method. The abrasive layer 420 can be 3 to 9 mils (7.62 × 10⁻⁵ to 2.29 × 10⁻⁴ meters) or 2 to 20 mils (5.08 × 10⁻⁵ to 5.08 × 10⁻⁴ meters) thick.

A transition layer 418 may be formed between the interlayer 414 and the abrasive layer 420. The transition layer 418 has a mixture of properties of the interlayer 414 and the abrasive layer 420. The transition layer 418 may have a thickness greater than 0 to 10 mils (0 to 2.54 × 10⁻⁴ meters). It should be noted that transition layers can be formed between any of the layers, and that the transition layers do not necessarily add to the overall thickness, but may be considered to be part of one of the adjacent layers. The transition layers may be a 3 mil transition from the inner adjacent layer to the next adjacent layer. For example, one transition layer can be a 3 mil (7.62 × 10⁻⁵ meters) transition from the interlayer 414 to the abrasive layer 420. So, for example, in an application with a 1 mil (2.54 × 10⁻⁵ meters) interlayer and 15 mil (3.81 × 10⁻⁴ meters) abrasive layer could be considered to be 1 mil (2.54 × 10⁻⁵ meters) interlayer, 3 mil (7.62 × 10⁻⁵ meters) transition layer, and a 12 mil (3.0 × 10⁻⁴ meters) abrasive layer.

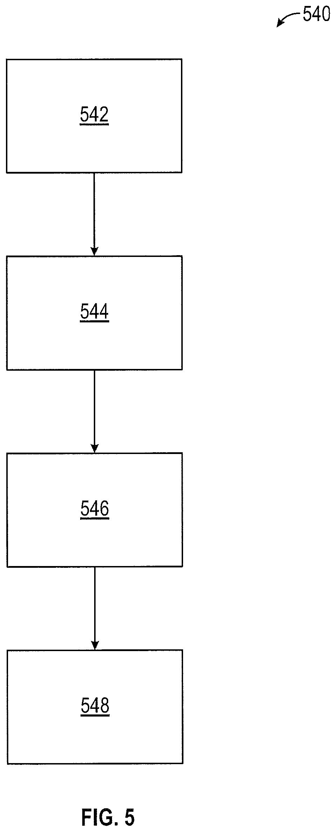

An embodiment of a method 540 for forming an air seal system is shown in the flow chart of Fig. 5. An exemplary preparation of the substrate, e.g., substrate 410, can include grit blasting the substrate. The bond coat, e.g., bond coat 412, may be applied (at block 542) to the substrate by any of a number of processes. The bond coat may comprise an alloy such as Ni₅Al, Ni₂₀Al, NiCr, NiCrAl, MCrAlY, or MCrAlYHfSi and may be supplied in powder or wire form. An exemplary material is PWA1386 powder available from Sulzer Metco of Westbury, NY. The powder may be deposited by any of a number of processes, however one that produces a dense (e.g. less than 15% porosity), low oxide (e.g., less than 5% oxygen) coating is suitable, for example. In some embodiments the porosity may be less than 5% and the coating comprises less than 2% oxygen. The bond coat may be applied using air plasma spray using conventional particle speeds or it may be applied using a process that operates with particle velocity greater than 1000 ft/s (304.8 m/s) such as in high velocity plasma spray, high velocity oxygen fuel, high velocity air fuel, cold spray and warm spray processes, for example. The bond coat thickness may be 3 to 6 mils (7.62 × 10⁻⁵ to 15.24 × 10⁻⁵ meters). The coating and part, e.g. bond coat 412 and substrate 410, may then be diffusion heat treated to further improve bonding and oxidation resistance.

In a suitable setup for deposition of the above described ceramic layers, a bond coated substrate is loaded into a hollow cylindrical fixture such that the bond coated surface face the inner diameter of the cylindrical fixture. An auxiliary heat source, such as gas burners, may be positioned around the fixture or the spray torch may be used to provide the desired heat. A means for monitoring and controlling the part temperature is employed. An exemplary means is an open loop using controlled input settings that have been shown to produce the desired temperature without real time feedback. A plasma spray torch is positioned facing the generally cylindrical fixture for depositing the layers. In another exemplary setup, the parts are insulated and the plasma torch provides the heat. Variable air blower pressure may be employed to limit and control part temperature in this configuration.

The parts may then be preheated to the desired process temperature and then the interlayer, e.g., interlayer 414, is applied at block 544. After a preheat time of approximately 10 minutes and the parts are at the temperature set point, the coating process is begun. The temperature set point is 600 to 1600°F (315 to 871°C), and may be 750 to 1000°F (398 to 538°C). In some embodiments the temperature set point is 100 to 500°F (56 to 278°C) less than the maximum use temperature of the substrate. It is also contemplated that the temperature set point may exceed the maximum use temperature of the substrate as long as the substrate is held at this temperature for a period of time less than that required to change the properties of the substrate. Air plasma spraying can be used while the part is held at the elevated temperature. As an example, an Oerlikon Metco 3MB torch is operated at 32 kilowatts with 100 scfh (standard cubic feet per hour) (786579 mm³/s) of nitrogen and 15 scfh (117987 mm³/s) of hydrogen gas flow. A suitable powder is alumina. An example of a suitable powder is PWA1310. This can be fed through a #2 powder port at 20 g/minute with 9 scfh (70792 mm³/s) of nitrogen carrier gas. The part is rotated at 60 rpm, for example, which can be adapted for other part sizes. The torch can be traversed back and forth in front of the part at a 4 inch (10.2 cm) stand-off distance and 9 inches (22.9 cm) per minute traverse speed.

The abrasive layer 420 may then be applied onto the interlayer, e.g., using air plasma spraying, at block 546. This may begin after the part has cooled sufficiently following the interlayer application or may be conducted as a separate spray event after the part has cooled and been reheated to the desired temperature. The powder may be the same as that used for the interlayer, or may be switched to one of different particle morphology or size. In an exemplary process, parameters are gradually adjusted while the first 3 mils (7.62 × 10⁻⁵ meters) of abrasive layer is being applied. Torch stand-off distance is increased to 5 inches (12.7 cm), fixture speed is increased to 120 rpm and traverse rate to 24 inches (61 cm) per minute. Coating application is continued until the final desired coating thickness is reached. In this example that is 12 mils (3.0 × 10⁻⁴ meters) of abrasive layer, which includes 3 mils (7.62 × 10⁻⁵ meters) of graded transition much as described above. The abrasive layer composition is any oxide ceramic or mixture of oxide ceramics that has a hardness on the Mohs scale of 7 or higher. At block 548 the abrasive layer is treated to achieve the desired surface roughness as described above. In some embodiments an excess of the abrasive layer is applied and the part is machined to the desired dimension prior to treating the abrasive layer to achieve the desired thickness.

While described above in the exemplary context of including a bond coat on the substrate, it is possible to use the ceramic layers on a base metal that does not require a bond coat for oxidation protection or adhesion. However it is to be expected that in typical high temperature or high strain applications the bond coat will be required.

The use of the terms "a," "an," "the," and similar references in the context of description (especially in the context of the following claims) are to be construed to cover both the singular and the plural, unless otherwise indicated herein or specifically contradicted by context. The modifier "about" used in connection with a quantity is inclusive of the stated value and has the meaning dictated by the context (e.g., it includes the degree of error associated with measurement of the particular quantity). All ranges disclosed herein are inclusive of the endpoints, and the endpoints are independently combinable with each other. It should be appreciated that relative positional terms such as "forward," "aft," "upper," "lower," "above," "below," and the like are with reference to normal operational attitude and should not be considered otherwise limiting.

While the present disclosure has been described in detail in connection with only a limited number of embodiments, it should be readily understood that the present disclosure is not limited to such disclosed embodiments. Rather, the present disclosure can be modified to incorporate any number of variations, alterations, substitutions, combinations, sub-combinations, or equivalent arrangements not heretofore described, but which are commensurate with the scope of the present disclosure. Additionally, while various embodiments of the present invention have been described, it is to be understood that aspects of the present invention may include only some of the described embodiments.

Accordingly, the present invention is not to be seen as limited by the foregoing description, but is only limited by the scope of the appended claims.

## Claims

1. A compressor inner air seal (310) for a gas turbine engine comprising:
a bond coat (412) disposed on a substrate, wherein the substrate is a rotor land,
an interlayer (414) disposed on the bond coat (412), and
an abrasive layer (420) disposed on the interlayer (414), wherein the interlayer (414) comprises alumina,
wherein the abrasive layer (420) consists of an oxide ceramic or mixture of oxide ceramics that has a hardness on the Mohs scale of 7 or higher
**characterised in that**
the abrasive layer (420) is applied at a temperature 400 to 1400 °F (222°C to 778°C) less than the temperature used to apply the interlayer (414),
the interlayer (414) is applied at a temperature of 600 to 1600°F (315 to 872°C), and
the interlayer (414) has a thickness of 0.1 to 5.0 mils (2.54 × 10⁻⁶ to 1.27 × 10⁻⁴ meters).

2. The compressor inner air seal (310) of claim 1, wherein the bond coat (412) comprises Ni₅Al, Ni₂₀Al, NiCr, NiCrAl, MCrAlY, or MCrAlYHfSi and has a thickness of 3 to 6 mils (7.62 × 10⁻⁵ to 15.24 × 10⁻⁵ meters).

3. The compressor inner air seal (310) of any one of the preceding claims, wherein the abrasive layer (420) is alumina and has a thickness of 2 to 20 mils (5.08 × 10⁻⁵ to 5.08 × 10⁻⁴ meters).

4. The compressor inner air seal (310) of any one of the preceding claims, wherein the abrasive layer (420) has a surface roughness of 40 to 200 micro inches (1.01 to 5.06 micrometers).

5. The compressor inner air seal (310) of any one of the preceding claims, further comprising a transition layer (418) between the interlayer (414) and the abrasive layer (420).

6. The compressor inner air seal (310) of claim 5, wherein the transition layer (418) has a thickness greater than 0 to 10 mils (0 to 2.54 × 10⁻⁴ meters).

7. A method for forming a compressor inner air seal (310) for a gas turbine engine comprising:
applying an interlayer (414) on a bond coat (412), wherein the bond coat (412) is disposed on a substrate; and
applying an abrasive layer (420) on the interlayer (414),
wherein the substrate is a rotor land and the interlayer (414) comprises alumina,
wherein the abrasive layer (420) consists of an oxide ceramic or mixture of oxide ceramics that has a hardness on the Mohs scale of 7 or higher;
**characterised in that**
the abrasive layer (420) is applied at a temperature 400 to 1400°F (222°C to 778°C) less than the temperature used to apply the interlayer (414),
the interlayer (414) is applied at a temperature of 600 to 1600°F (315 to 872°C), and
the interlayer (414) has a thickness of 0.1 to 5.0 mils (2.54 × 10⁻⁶ to 1.27 × 10⁻⁴ meters).

8. The method of claim 7, wherein the interlayer (414) is formed by air plasma spraying an interlayer material onto the bond coat (412) while the substrate and bond coat (412) are held at an elevated temperature.

9. The method of claim 7 or claim 8, wherein applying the abrasive layer (420) comprises air plasma spraying abrasive layer material onto the interlayer (414).

10. The method of any one of claims 7-9, further comprising treating the abrasive layer (420) to roughen the surface of the abrasive layer (420).

## Patentansprüche

1. Verdichterinnenluftdichtung (310) für ein Gasturbinentriebwerk, umfassend:
eine Bindeschicht (412), die auf einem Substrat angeordnet ist, wobei das Substrat ein Rotorsteg ist,
eine Zwischenschicht (414), die auf der Bindeschicht (412) angeordnet ist, und
eine Schleifschicht (420), die auf der Zwischenschicht (414) angeordnet ist, wobei die Zwischenschicht (414) Aluminiumoxid umfasst,
wobei die Schleifschicht (420) aus einer Oxidkeramik oder einer Mischung aus Oxidkeramik besteht, die eine Härte auf der Mohs-Skala von 7 oder höher aufweist,
**dadurch gekennzeichnet, dass**
die Schleifschicht (420) bei einer Temperatur aufgetragen wird, die 400 bis 1400 °F (222 °C bis 778 °C) niedriger ist als die Temperatur, die zum Auftragen der Zwischenschicht (414) verwendet wird,
die Zwischenschicht (414) bei einer Temperatur von 600 bis 1600 °F (315 bis 872 °C) aufgetragen wird und
die Zwischenschicht (414) eine Dicke von 0,1 bis 5,0 mil (2,54 × 10⁻⁶ bis 1,27 × 10⁻⁴ Meter) aufweist.

2. Verdichterinnenluftdichtung (310) nach Anspruch 1, wobei die Bindeschicht (412) Ni₅Al, Ni₂₀Al, NiCr, NiCrAl, MCrAlY oder MCrAlYHfSi umfasst und eine Dicke von 3 bis 6 mil (7,62 × 10⁻⁵ bis 15,24 × 10⁻⁵ Meter) aufweist.

3. Verdichterinnenluftdichtung (310) nach einem der vorhergehenden Ansprüche, wobei die Schleifschicht (420) aus Aluminiumoxid besteht und eine Dicke von 2 bis 20 mil (5,08 × 10⁻⁵ bis 5,08 × 10⁻⁴ Meter) aufweist.

4. Verdichterinnenluftdichtung (310) nach einem der vorhergehenden Ansprüche, wobei die Schleifschicht (420) eine Oberflächenrauheit von 40 bis 200 Mikrozoll (1,01 bis 5,06 Mikrometer) aufweist.

5. Verdichterinnenluftdichtung (310) nach einem der vorhergehenden Ansprüche, ferner umfassend eine Übergangsschicht (418) zwischen der Zwischenschicht (414) und der Schleifschicht (420).

6. Verdichterinnenluftdichtung (310) nach Anspruch 5, wobei die Übergangsschicht (418) eine Dicke von mehr als 0 bis 10 Mil (0 bis 2,54 × 10⁻⁴ Meter) aufweist.

7. Verfahren zum Bilden einer Verdichterinnenluftdichtung (310) für ein Gasturbinentriebwerk, umfassend:
Auftragen einer Zwischenschicht (414) auf eine Bindeschicht (412), wobei die Bindeschicht (412) auf einem Substrat angeordnet ist; und
Auftragen einer Schleifschicht (420) auf die Zwischenschicht (414),
wobei das Substrat ein Rotorsteg ist und die Zwischenschicht (414) Aluminiumoxid umfasst,
wobei die Schleifschicht (420) aus einer Oxidkeramik oder einer Mischung aus Oxidkeramik besteht, die eine Härte auf der Mohs-Skala von 7 oder höher aufweist;
**dadurch gekennzeichnet, dass**
die Schleifschicht (420) bei einer Temperatur aufgetragen wird,
die 400 bis 1400 °F (222 °C bis 778 °C) niedriger ist als die Temperatur, die zum Auftragen der Zwischenschicht (414) verwendet wird,
die Zwischenschicht (414) bei einer Temperatur von 600 bis 1600 °F (315 bis 872 °C) aufgetragen wird und
die Zwischenschicht (414) eine Dicke von 0,1 bis 5,0 mil (2,54 × 10⁻⁶ bis 1,27 × 10⁻⁴ Meter) aufweist.

8. Verfahren nach Anspruch 7, wobei die Zwischenschicht (414) durch Luftplasmaspritzen eines Zwischenschichtmaterials auf die Bindeschicht (412) gebildet wird, während das Substrat und die Bindeschicht (412) bei einer erhöhten Temperatur gehalten werden.

9. Verfahren nach Anspruch 7 oder Anspruch 8, wobei das Aufbringen der Schleifschicht (420) Luftplasmaspritzen von Schleifschichtmaterial auf die Zwischenschicht (414) umfasst.

10. Verfahren nach einem der Ansprüche 7-9, ferner umfassend Behandeln der Schleifschicht (420), um die Oberfläche der Schleifschicht (420) aufzurauen.

## Revendications

1. Joint d'étanchéité à l'air intérieur de compresseur (310) pour un moteur à turbine à gaz comprenant :
un revêtement d'accrochage (412) disposé sur un substrat, dans lequel le substrat est un méplat de rotor,
une couche intermédiaire (414) disposée sur le revêtement d'accrochage (412), et
une couche abrasive (420) disposée sur la couche intermédiaire (414), dans lequel la couche intermédiaire (414) comprend de l'alumine,
dans lequel la couche abrasive (420) est constituée d'une céramique d'oxyde ou d'un mélange de céramiques d'oxyde qui a une dureté sur l'échelle de Mohs de 7 ou plus
**caractérisé en ce que**
la couche abrasive (420) est appliquée à une température inférieure de 400 à 1 400 °F (222 °C à 778 °C) à la température utilisée pour appliquer la couche intermédiaire (414),
la couche intermédiaire (414) est appliquée à une température de 600 à 1 600 °F (315 à 872 °C), et
la couche intermédiaire (414) a une épaisseur de 0,1 à 5,0 mils (2,54 × 10⁻⁶ à 1,27 × 10⁻⁴ mètres) .

2. Joint d'étanchéité à l'air intérieur de compresseur (310) selon la revendication 1, dans lequel le revêtement d'accrochage (412) comprend Ni₅Al, Ni₂₀Al, NiCr, NiCrAl, MCrAlY ou MCrAlYHfSi et a une épaisseur de 3 à 6 mils (7,62 × 10⁻⁵ à 15,24 × 10-⁵ mètres).

3. Joint d'étanchéité à l'air intérieur de compresseur (310) selon l'une quelconque des revendications précédentes, dans lequel la couche abrasive (420) est de l'alumine et a une épaisseur de 2 à 20 mils (5,08 × 10⁻⁵ à 5,08 × 10⁻⁴ mètres) .

4. Joint d'étanchéité à l'air intérieur de compresseur (310) selon l'une quelconque des revendications précédentes, dans lequel la couche abrasive (420) a une rugosité de surface de 40 à 200 micropouces (1,01 à 5,06 micromètres).

5. Joint d'étanchéité à l'air intérieur de compresseur (310) selon l'une quelconque des revendications précédentes, comprenant en outre une couche de transition (418) entre la couche intermédiaire (414) et la couche abrasive (420).

6. Joint d'étanchéité à l'air intérieur de compresseur (310) selon la revendication 5, dans lequel la couche de transition (418) a une épaisseur supérieure à 0 à 10 mils (0 à 2,54 × 10⁻⁴ mètres).

7. Procédé de formation d'un joint d'étanchéité à l'air intérieur de compresseur (310) pour un moteur à turbine à gaz comprenant :
l'application d'une couche intermédiaire (414) sur un revêtement d'accrochage (412), dans lequel le revêtement d'accrochage (412) est disposé sur un substrat ; et
l'application d'une couche abrasive (420) sur la couche intermédiaire (414),
dans lequel le substrat est un méplat de rotor et la couche intermédiaire (414) comprend de l'alumine,
dans lequel la couche abrasive (420) est constituée d'une céramique d'oxyde ou d'un mélange de céramiques d'oxyde qui a une dureté sur l'échelle de Mohs de 7 ou plus ;
**caractérisé en ce que**
la couche abrasive (420) est appliquée à une température inférieure de 400 à 1 400 °F (222 °C à 778 °C) à la température utilisée pour appliquer la couche intermédiaire (414),
la couche intermédiaire (414) est appliquée à une température de 600 à 1 600 °F (315 à 872 °C), et
la couche intermédiaire (414) a une épaisseur de 0,1 à 5,0 mils (2,54 × 10⁻⁶ à 1,27 × 10⁻⁴ mètres).

8. Procédé selon la revendication 7, dans lequel la couche intermédiaire (414) est formée par pulvérisation par plasma d'air d'un matériau de couche intermédiaire sur le revêtement d'accrochage (412) tandis que le substrat et le revêtement d'accrochage (412) sont maintenus à une température élevée.

9. Procédé selon la revendication 7 ou la revendication 8, dans lequel l'application de la couche abrasive (420) comprend la pulvérisation par plasma d'air du matériau de couche abrasive sur la couche intermédiaire (414).

10. Procédé selon l'une quelconque des revendications 7 à 9, comprenant en outre le traitement de la couche abrasive (420) pour rendre rugueuse la surface de la couche abrasive (420).
